# DEMANDE DE BREVET EUROPEEN

(11) **EP 0 790 419 A1**
(43) Date de publication de la demande: **20.08.1997**
(21) Numéro de dépôt: 97400113.3
(22) Date de dépôt: 21.01.1997
(51) Int. Cl.: F16C 7/02

(54) **Bielle de moteur a combustion interne**

(30) Priorité: 16.02.1996 FR 9601916
(71) Demandeur: ASCOMETAL (Société anonyme), F-92800 Puteaux (FR)
(72) Inventeur: Genouille, Michel, 91370 Verrieres le Buisson (FR)
(74) Mandataire: Ventavoli, Roger

(57) **Abrégé**

La présente invention a pour objet une bielle, notamment de moteur à combustion interne, comportant un corps (1), un pied (2) de bielle et une tête (3) de bielle, formant deux paliers de pied de bielle et de tête de bielle et destinés à recevoir respectivement, un axe de piston et un maneton de vilebrequin, ladite bielle étant constituée de deux parties (5), sensiblement symétriques par rapport à un plan médian (6) longitudinal de la bielle, leur surface de jointure (9) étant essentiellement disposée dans ledit plan médian (6), lesdites parties (5) qui portent chacune un demi-palier (7) de pied de bielle et un demi-palier (8) de tête de bielle étant liés entre elles par au moins un moyen d'immobilisation, ladite bielle se caractérisant en ce que le moyen d'immobilisation, situé à l'extrémité de la bielle du coté du pied de ladite bielle et en dehors de l'axe du piston, est constitué d'une articulation dont les éléments, identiques sur chaque partie de bielle, s'étendant au delà du plan défini par la surface de jointure et présentant une épaisseur sensiblement égale à la moitié de l'épaisseur de la bielle, sont montés en vis-à-vis, les portées de chaque élément, surfaces de frottement de l'articulation étant orientées perpendiculairement à l'axe longitudinal du palier de la bielle, les éléments de chacune des parties étant maintenus joints par un moyen d'assemblage.

## Description

La présente invention concerne une bielle, notamment de moteur à combustion interne, comportant un corps, un pied de bielle et une tête de bielle formant deux paliers de pied de bielle et de tête de bielle et destinés à recevoir respectivement, un axe de piston et un maneton de vilebrequin, ladite bielle étant constituée de deux parties, sensiblement symétriques par rapport à un plan médian longitudinal de la bielle, leur surface de jointure étant essentiellement disposée dans le plan médian, lesdites parties qui portent chacune un demi-palier de pied de bielle et un demi-palier de tête de bielle étant liées entre elles par au moins un moyen d'immobilisation.

Il est connu de la demande de brevet français n°92 13 859 une bielle comportant un corps, un pied de bielle et une tête de bielle formant des paliers cylindriques, destinés à recevoir, d'une part, un axe de piston et, d'autre part, un maneton de vilebrequin. La bielle est constituée de deux parties forgées qui sont assemblées l'une sur l'autre le long d'une surface de jointure et bloquées l'une sur l'autre par des moyens d'immobilisation. Les deux parties, comportant chacune deux demi-paliers, sont sensiblement symétriques par rapport au plan médian longitudinal de la bielle et la surface de jointure est essentiellement disposée dans ledit plan médian longitudinal. Au moins un élément d'immobilisation est situé sur le corps de la bielle entre la tête de bielle et le pied de bielle.

Il est présenté, dans le document cité, deux parties disjointes, au moins à une de leurs extrémités, côté pied de bielle et/ou côté tête de bielle, et présentant, par leur écartement, un degré de liberté de rotation l'une par rapport à l'autre autour de l'axe du piston, ou encore, du pied de bielle et/ou du maneton de vilebrequin, ou encore, de l'axe de tête de bielle.

De préférence, le pied de bielle est en forme de croissant ou de couronne ouverte, dégageant une partie de surface de l'axe du piston, ce qui permet une réduction de la longueur de la bielle et une réduction de la distance entre l'axe du piston et le fond du piston.

Cette conception de pied de bielle présente l'inconvénient de localiser les efforts de contact entre, notamment, la bielle et l'axe de piston dans un secteur angulaire relativement éloigné du plan médian de symétrie de la bielle. En conséquence, ces efforts de contact, normaux à l'axe de piston et à l'alésage cylindrique du pied de bielle engendrent des composantes perpendiculaires au plan médian de symétrie dont la résultante provoque une ouverture par déformation en flexion de chaque demi-palier de bielle. Cette déformation, bien que très faible, provoque des micro-déplacements entre axe de piston et demi-paliers de bielle qui conduisent à la dégradation de l'axe de piston par l'apparition d'un phénomène dit de "fretting" pouvant être nuisible à la bonne tenue de l'axe, et générateur de bruit.

Pour éviter la déformation qui provoque l'ouverture par flexion de chaque demi-palier de bielle, il est possible d'augmenter les masses des demi-paliers mais, l'augmentation de la masse va à l'encontre du but recherché qui est de réduire le plus possible les masses en mouvement du moteur.

L'invention a pour but de proposer une bielle forgée, notamment de moteur à combustion interne, qui présente un degré de liberté de rotation angulaire d'une partie de bielle par rapport à l'autre partie de bielle autour d'un axe, ce qui permet un écartement, en compas, des demi-paliers de tête de bielle pour une liaison montable et démontable de la bielle sur le maneton du vilebrequin.

Elle a pour objet une bielle forgée qui se caractérise en ce que le moyen d'immobilisation situé à l'extrémité de la bielle, du coté du pied de ladite bielle, est constitué d'une articulation dont les éléments, identiques sur chaque demi-bielle, s'étendant au-delà du plan défini par la surface de jointure et présentant une épaisseur sensiblement égale à la moitié de l'épaisseur de la bielle, sont placés en vis-à-vis, les portées de chaque élément, surfaces de frottement de l'articulation étant orientées perpendiculairement aux axes longitudinaux des paliers de la bielle, les éléments de chacune des parties de bielle étant maintenus joints par un moyen d'assemblage.

Les autres caractéristiques de l'invention sont :
- le moyen d'assemblage est composé d'un axe traversant les éléments perpendiculairement aux surfaces des portées pour former un axe d'articulation.
- l'axe d'articulation est choisi parmi une goupille, un boulon, une épingle.

La description qui suit et les dessins annexés, le tout donné à titre d'exemple non limitatif, fera bien comprendre l'invention.

La figure 1 est une vue générale en perspective d'une bielle de l'art antérieur.

La figure 2 présente, en vue de face, un pied de bielle dans un exemple de réalisation selon l'invention.

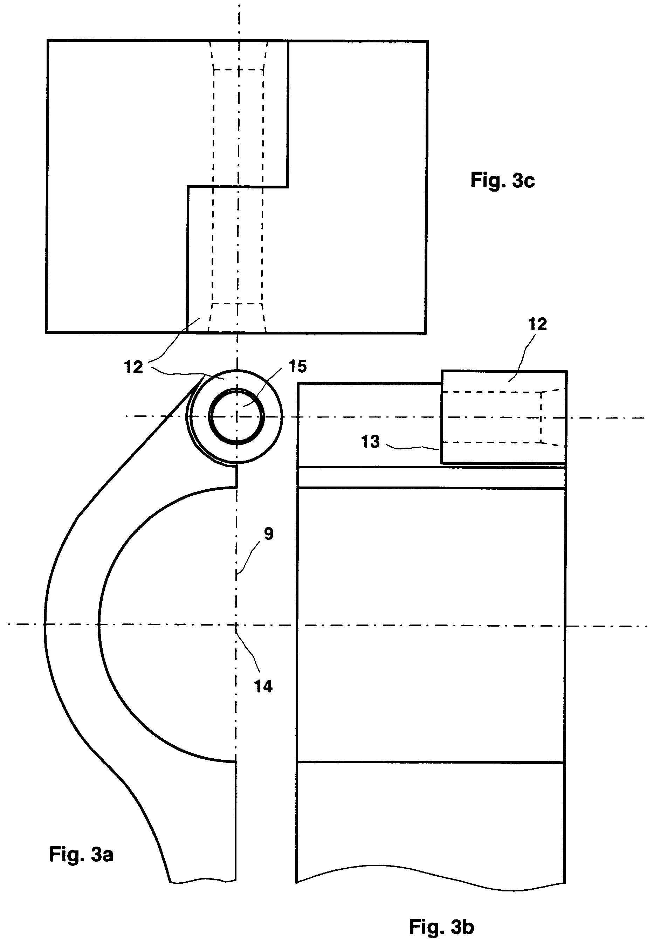

Les figures 3a, 3b, 3c présentent une partie de bielle dans l'exemple de réalisation selon l'invention.

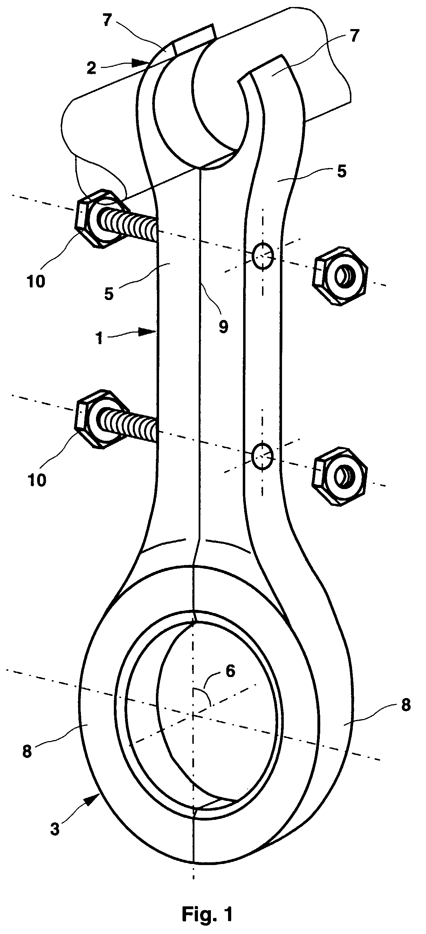

La figure 1 présente une bielle de l'art antérieur, notamment de moteur à combustion interne qui comporte un corps 1, un pied 2 de bielle et une tête 3 de bielle formant des paliers destinés, chacun, à recevoir un axe de piston 4 cylindrique représenté en traits fins sur la figure, ou un maneton de vilebrequin non représenté sur ladite figure. La bielle est constituée de deux parties 5, symétriques par rapport à un plan médian longitudinal 6 de ladite bielle, les parties 5, comportant à chacune de leur extrémités un demi-palier 7, 8.

La surface de jointure 9 des deux parties 5, est essentiellement disposée dans le plan médian 6 et les parties 5 sont liées entre elles par un moyen d'immobilisation ménagé sur le corps 1 de bielle entre le pied 2 et la tête 3 de bielle. Dans cet exemple de réalisation, le moyen d'immobilisation est constitué de deux boulons 10.

Cette bielle de l'art antérieur connu génère, en fonctionnement, des efforts de contact entre demi-paliers 7, de bielle et axe de piston 4, localisés dans un secteur angulaire de part et d'autre du plan de symétrie, dans une zone de l'axe, la plus éloignée du corps 1. Ces efforts de contact normaux à la surface cylindrique de l'alésage du palier engendrent des composantes perpendiculaires au plan médian 6 dont la résultante provoque un écartement par déformation en flexion de chacun des demi-paliers 7, de bielle.

Cette déformation, bien que très faible, provoque des micro-déplacements entre axe de piston et palier, ce qui conduit à l'apparition d'un phénomène de dégradation des surfaces appelé "fretting" nuisible à la bonne tenue de l'axe de piston et générant du bruit.

Pour éviter cette déformation, différents dispositifs ont été imaginés comme l'apport d'une clé par exemple longiligne qui relie les demi-paliers 7 de pied de bielle, perpendiculairement au plan médian de la bielle et qui s'insère dans des encoches ménagées en extrémité des paliers pour prendre un appui sur les faces extérieures des demi-paliers. Cette clé nécessairement très courte pour des raisons d'encombrement dans le fond du piston, présente une élasticité très faible et nécessite des usinages avec des tolérances extrêmement précises dont le coût peut diminuer l'intérêt économique de cette solution. De plus, le non respect des tolérances induirait des contraintes prohibitives dans la clé. D'autre part, le montage de cette clé en automatique est quasiment impossible.

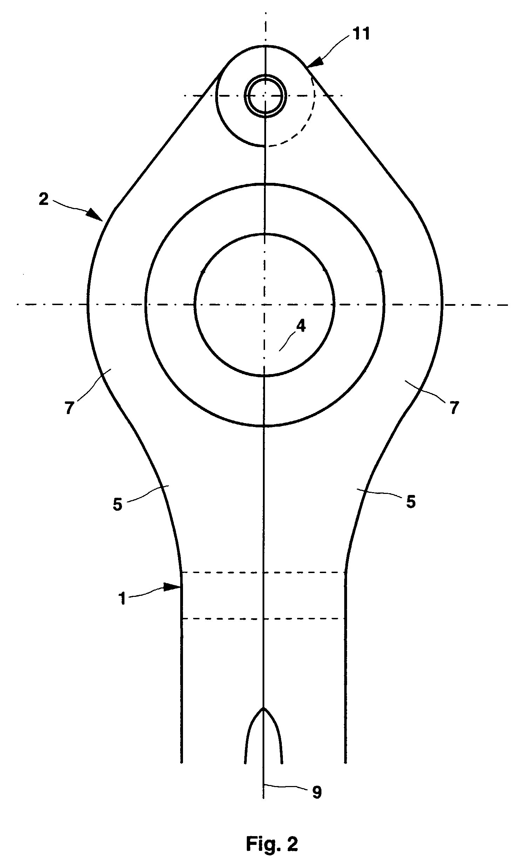

La figure 2, dans un exemple de réalisation de l'invention, présente une extrémité de bielle et en particulier un pied de bielle comportant un corps 1, un pied 2 de bielle formant un palier destiné à recevoir un axe de piston 4.

La bielle est constituée de deux parties 5, symétriques par rapport au plan médian 6 de la bielle, lesdites parties 5, comportant deux demi-paliers 7.

Selon l'invention, le moyen d'immobilisation, placé à l'extrémité de la bielle du coté du pied 2 de bielle et en dehors de l'axe de piston 4, est constitué d'une articulation 11 dont les éléments 12, identiques sur chaque partie 5 de bielle, s'étendant au-delà du plan défini par la surface de jointure 9 et présentant une épaisseur sensiblement égale à la moitié de l'épaisseur de la bielle, sont montés en vis-à-vis, les portées 13 de chaque élément 12, surfaces de frottement de l'articulation 11 pendant le montage de la bielle sur le maneton de vilebrequin, étant orientées perpendiculairement à l'axe longitudinal 14 du palier de la bielle, les éléments 12 de chacune des parties 5 de bielles étant maintenus joints par un moyen d'assemblage.

Dans un exemple d'application, le moyen d'assemblage peut être deux pattes, venues de forgeage ménagées sur chacun des éléments, pattes qui forment crochet et pivot de rotation.

Ainsi, à l'assemblage, avant montage, des deux parties de bielle par l'articulation 11, les deux pattes sont soumises à une précontrainte en flexion exercée lors du rapprochement et du contact des surfaces de jointure 9 des deux parties 5 de bielle. Cette précontrainte évite ou réduit une éventuelle tendance à l'écartement des deux demi-paliers 7, tendance qui pourrait naître de la déformation sous charge appliquée aux demi-paliers par l'intermédiaire de la surface cylindrique de l'axe du piston.

Dans une autre forme de l'invention, le moyen d'assemblage est composé d'un axe 15 traversant les éléments 12 perpendiculairement aux surfaces des portées 13 pour former un axe d'articulation. L'axe d'articulation est choisi parmi une goupille pouvant être immobilisée par un léger matage en au moins une de ses extrémités, un boulon dont le tête et l'écrou pourraient être encastrés dans des lamages, une épingle maintenue prisonnière.

## Revendications

1. Bielle forgée, notamment de moteur à combustion interne, comportant un corps (1), un pied (2) de bielle et une tête (3) de bielle, formant deux paliers de pied de bielle et de tête de bielle, destinés à recevoir respectivement un axe de piston et un maneton de vilebrequin, ladite bielle étant constituée de deux parties (5), sensiblement symétriques par rapport à un plan médian (6) longitudinal de la bielle, leur surface de jointure (9) étant essentiellement disposée dans ledit plan médian (6), lesdites parties (5) qui portent chacune un demi-palier (7) de pied de bielle et un demi-palier (8) de tête de bielle, étant liées entre elles par au moins un moyen d'immobilisation, caractérisée en ce que le moyen d'immobilisation, situé à l'extrémité de la bielle du coté du pied de ladite bielle et en dehors de l'axe du piston, est constitué d'une articulation dont les éléments, identiques sur chaque partie de bielle, s'étendant au-delà du plan défini par la surface de jointure et présentant une épaisseur sensiblement égale à la moitié de l'épaisseur de la bielle, sont montés en vis-à-vis, les portées de chaque élément, surfaces de frottement de l'articulation étant orientées perpendiculairement à l'axe longitudinal du palier de la bielle, les éléments de chacune des parties étant maintenus joints par un moyen d'assemblage.

2. Bielle selon la revendication 1, caractérisée en ce que le moyen d'assemblage est composé d'un axe traversant les éléments perpendiculairement aux surfaces des portées pour former un axe d'articulation.

3. Bielle selon les revendications 1 à 2, caractérisée en ce que l'axe d'articulation est choisi parmi une goupille, un boulon, une épingle.
